# EUROPÄISCHE PATENTSCHRIFT

(11) **EP 1 091 150 B1**
(45) Veröffentlichungstag und Bekanntmachung des Hinweises auf die Patenterteilung: **06.03.2002**
(21) Anmeldenummer: 99119793.0
(22) Anmeldetag: 06.10.1999
(51) Int. Cl.: F16H 61/28

(54) **Schaltvorrichtung für ein Wechselgetriebe**
Shift mechanism for change-speed gearing
Dispositif de changement de vitesse pour une boîte de vitesse

(43) Veröffentlichungstag der Anmeldung: 11.04.2001
(73) Patentinhaber: Ford Global Technologies, Inc., A subsidiary of Ford Motor Company, Dearborn, Michigan 48126 (US)
(72) Erfinder: Wollny, Thomas, 50997 Köln (DE); Doelling, Mathhias, 51429 Bergisch Gladbach (DE); Woerner, Felix, 50670 Köln (DE)
(74) Vertreter: Messulam, Alec Moses

(56) Entgegenhaltungen:
- EP-A- 0 490 730
- DE-A- 19 507 705
- DE-A- 19 523 141
- DE-A- 19 754 760
- DE-A- 19 822 666
- DE-C- 4 443 523

## Beschreibung

Die Erfindung bezieht sich auf eine Schaltvorrichtung mit einer Hilfskraft-Betätigungseinheit für ein Wechselgetriebe gemäß dem Oberbegriff des Anspruchs 1.

Aus der DE 195 23 141 A1 und DE 44 43 523 C1 ist eine Schaltvorrichtung für ein Gangwechselgetriebe eines Kraftfahrzeuges gemäß dem Oberbegriff des Anspruchs 1 bekannt, bei der die sich nach aussen erstreckende Schaltwelle über ein Kragenbauteil mit einer Ringnut und einem radialen Hebelarm, an dem Betätigungsglieder einer äusseren Betätigungsvorrichtung angreifen, axial verschiebbar und radial verschwenkbar ist.

Aus der EP 0 490 730 B1 ist eine Schaltvorrichtung mit einer Hilfskraft-Betätigungseinheit für ein Wechselgetriebe bekannt, bei dem eine solche nach außen geführte Schaltwelle über entsprechende Betätigungsglieder einer hydraulischen Betätigungseinheit axial verschiebbar und radial verschwenkbar ist, wobei die Verschiebung mittels eines zweiarmigen Hebels erfolgt, dessen einer Arm in die Ringnut des Kragenbauteiles eingreift und dessen anderer Arm ein Kupplungselement für ein Betätigungsglied der Hilfskraft-Betätigungseinheit bildet.

In der DE 198 22 668 ist eine Schaltvorrichtung mit einer Hilfskraft-Betätigungseinheit für ein Wechselgetriebe offenbart, bei der auf der Schaltwelle ein radialer Hebelarm in Form einer prismatischen axialen Nut ausgebildet ist, der ein Kupplungselement für ein weiteres Betätigungsglied der Hilfskraft-Betätigungseinheit bildet.

Bei diesen bekannten Schaltvorrichtungen für ein Wechselgetriebe mit hilfskraftbetätigten Betätigungsgliedern sind diese Betätigungsglieder an verteilten Stellen ausserhalb des Getriebegehäuses angeordnet und wirken über Stangen- und Hebelanordnungen auf die axial verschiebbare und radial verschwenkbare Schaltwelle ein.

Der Aufwand zur Herstellung und Montage der bekannten Schaltvorrichtung für ein Wechselgetriebe mit hilfskraftbetätigten Betätigungsgliedern ist sehr schwierig und zeitintensiv und damit sehr teuer.

Die Aufgabe der Erfindung ist es, eine Schaltvorrichtung für ein Wechselgetriebe der erläuterten Art derart weiterzubilden, dass eine Betätigungseinheit mit den entsprechenden hilfskraftbetätigten Betätigungsgliedem mit dem Kragenbauteil an der Schaltwelle der bereits am Wechselgetriebe montierten inneren Schaltvorrichtung in einem einfachen Aufsetz-Montagevorgang derart verbunden werden kann, dass die entsprechenden Verbindungen zwischen dem Kragenbauteil und den äußeren Betätigungsgliedem eindeutig und lagerichtig hergestellt werden.

Gemäss der Erfindung wird diese Aufgabe gelöst, indem eine Schaltvorrichtung für ein Wechselgetriebe, der im Oberbegriff des Patentanspruches 1 erläuterten Art, die im Kennzeichenteil des Patentanspruches 1 aufgezeigten Massnahmen aufweist.

Dadurch, dass das Kragenbauteil mit einer äusseren Hebelanordnung und einer Kupplungsanordnung versehen ist, können die in ihrer Neutrallage gehaltenen Betätigungsglieder der Hilfskraft-Betätigungseinheit durch einen einfachen Aufsetz-Montagevorgang mit den gleichfalls in ihrer Neutrallage gehaltenen Elementen der inneren Schaltvorrichtung lagerichtig verbunden werden.

Die Erfindung wird anhand eines in den Zeichnungen gezeigten Ausführungsbeispieles näher erläutert. Es zeigt:
- Fig. 1: eine Schrägrissansicht der auf dem Schaltungsvorrichtungsdeckel montierten inneren Schaltvorrichtung mit der erfindungsgemässen Hebelanordnung für das Kragenbauteil und dessen Kupplungsanordnung;
- Fig. 2: eine Schrägrissansicht der Hilfskraft-Betätigungseinheit;
- Fig. 3: eine Schrägrissansicht der auf dem Schaltungsvorrichtungsdeckel angeordneten inneren Schaltvorrichtung bei bereits aufgesetzter Hilfskraft-Betätigungseinheit in teilweisem Freischnitt des Betätigungsgehäuses und
- Fig. 4: eine Schrägrissansicht von Teilen der Betätigungsglieder der äusseren Betätigungsvorrichtung bei entferntem Gehäuse der Hilfskraft-Betätigungseinheit.

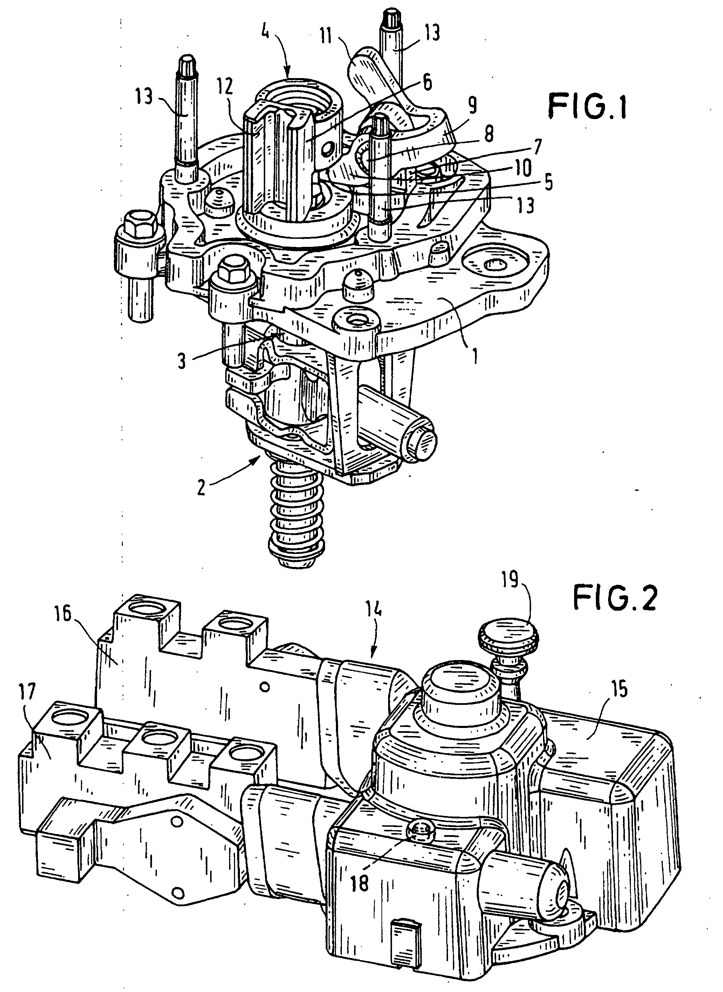

In Fig. 1 ist an einem an sich bekannten, eine Getriebegehäuseöffnung abschliessenden Schaltvorrichtungsdeckel 1 eine innere Schaltvorrichtung 2 angeordnet, deren Einzelheiten dem Fachmann bekannt sind und die dementsprechend hier nicht im einzelnen beschrieben werden.

Eine Schaltwelle 3 ist axial verschiebbar und radial verschwenkbar in dem Schaltvorrichtungsdeckel 1 angeordnete, um z.B. durch eine axiale Bewegung eine Vorwahl von Schaltgassen und durch eine radiale Bewegung ein Einrücken von Gangstufen bewerkstelligen zu können. Je nach Bauform des angeschlossenen Wechselgetriebes kann jedoch auch eine Vorwählbewegung durch eine Radialbewegung und ein Einrücken durch eine Axialbewegung bewerkstelligt werden.

Die Schaltwelle 3 erstreckt sich durch den Schaltvorrichtungsdeckel 1 nach aussen und ist dort mit einem Kragenbauteil 4 verbunden, an dem über eine Ringfläche 5 und einen radialen Hebelarm 6 Betätigungsglieder einer äusseren Betätigungsvörrichtung angreifen, um die entsprechenden Vorwähl- bzw. Schaltbewegungen von einem im Kraftfahrzeug angeordneten entfernten Handschalthebel auf die Schaltwelle 3 zu übertragen.

Gemäss der Erfindung ist am Schaltvorrichtungsdeckel 1 an einem Lagerbock 7 um einen Bolzen 8 schwenkbar ein zweiarmiger Hebel 9 angeordnete, dessen einer Arm 10 unter die Ringfläche 5 am Kragenbauteil 4 greift und dessen anderer Arm 11 als Kupplungselement für ein Betätigungsglied der äusseren Schaltvorrichtung zur Verfügung steht.

Der radiale Hebelarm 6 des Kragenbauteiles 4 ist gemäss der Erfindung als eine prismatische Axialnut 12 ausgeführt, die als Kupplungselement für ein weiteres Betätigungsglied der äusseren Betätigungsvorrichtung zur Verfügung steht.

An dem Schaltvorrichtungsdeckel 1 sind drei Führungsbolzen 13 eingeschraubt, die mit entsprechenden Bohrungen in dem Hilfskraft-Betätigungsgehäuse 15 zusammenwirken, um eine Führung während des Aufsetz-Montagevorganges bereitzustellen.

In Fig. 2 ist die Hilfskraft-Betätigungseinheit 14 in Schrägrissdarstellung gezeigt, sie besteht im wesentlichen aus einem Hilfskraft-Betätigungsgehäuse 15 und zwei Hilfskraft-Betätigungseinheiten 16 und 17, die in der vorliegenden Ausführungform als hydraulische Zylindereinheiten ausgebildet sind, die über Flansche am Hilfskraft-Betätigungsgehäuse 15 angeschraubt sind. Selbstverständlich können die Hilfskraft-Betätigungseinheiten auch als pneumatische oder elektromotorische Betätigungseinheiten ausgebildet sein.

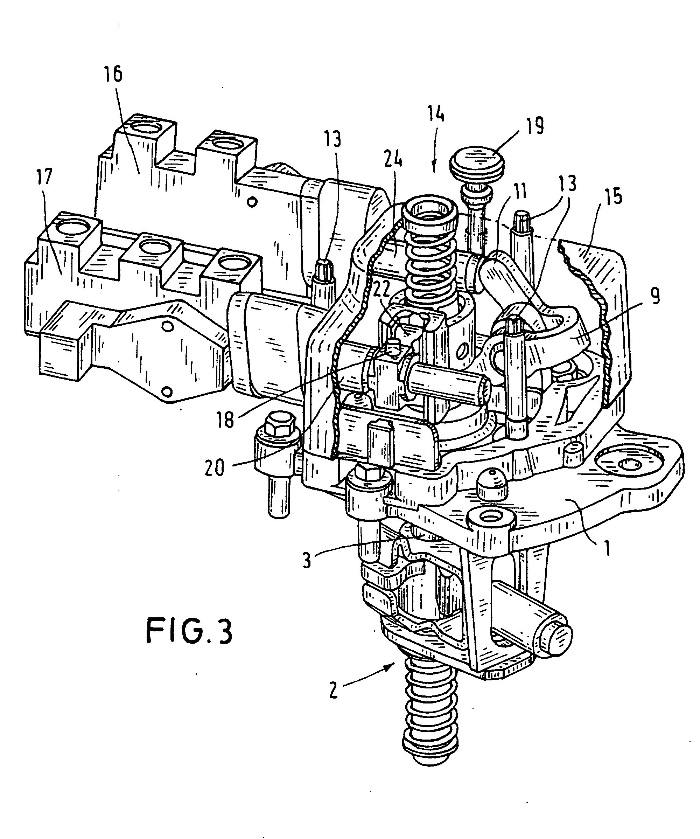

In Fig. 3 ist die Hilfskraft-Betätigungseinheit 14 über die Führungsbolzen 13 auf den Schaltvorrichtungsdeckel 1 aufgesetzt und in Bohrungen (nicht gezeigt) des Hilfskraft-Betätigungsgehäuses 15 sind Justierbolzen 18 und 19 eingesetzt, wobei der Bolzen 18 als ein abscherbarer Kunststoffbolzen ausgebildet ist, während der Bolzen 19 als von Hand aus zu entfernender Bolzen ausgebildet ist.

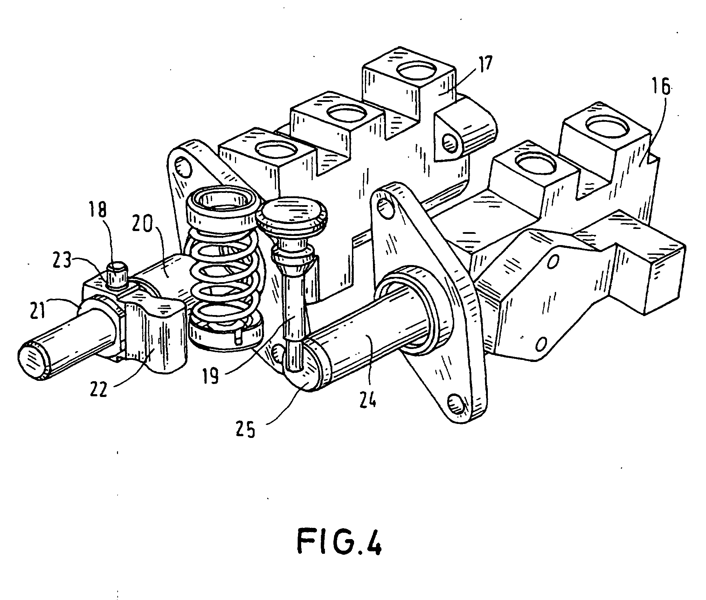

Aus Fig. 4 ist die Lage der Justierbolzen 18 und 19 im Zusammenwirken mit den Betätigungsgliedem 20 und 24 der Betätigungseinheiten 16 und 17 durch Weglassen des Hilfskraft-Betätigungsgehäuses 15 klarer zu erkennen.

Am Betätigungsglied 20 der Betätigungseinheit 17 ist eine Nabe 21 mit einer Art Schaltfinger 22 angeordnet, dessen Neutrallage für die Montage dadurch festgelegt wird, daß der mit seinem einen Ende in einer Bohrung des Hilfskraft-Betätigungsgehäuses (nicht gezeigt) aufgenommene Justierbolzen 18 in eine Bohrung 23 in der Nabe 21 einragt. Das Betätigungsglied 24 der Betätigungseinheit 16 liegt mit einer Endfläche 25 gegen das Ende des Justierbolzens 19, der in seinem oberen Bereich in einer Bohrung des Hilfskraft-Betätigungsgehäuses (nicht gezeigt) aufgenommen ist und damit die Lage des Betätigungsgliedes 24 festlegt.

Der Justierbolzen 18 ist hierbei in einer Sackbohrung im Hilfskraft-Betätigungsgehäuse aufgenommen und besteht aus Kunststoff und wird bei einer erstmaligen Betätigung der Schaltvorrichtung abgeschert. Der Justierbolzen 19 ist in einer Durchgangsbohrung des Hilfskraft-Betätigungsgehäuses angeordnet und muss vor einer erstmaligen Betätigung von Hand aus entnommen werden und die dann freigewordene Bohrung wird durch Einsetzen einer Entlüftungseinrichtung bekannter Bauart nach aussen hin abgeschlossen.

Bei der erfindungsgemässen Schaltvorrichtung für ein Wechselgetriebe kann die in an sich bekannter Weise an einem Schaltvorrichtungsdeckel 1 angeordnete innere Schaltvorrichtung 2 mit der Schaltwelle 3 und deren sich nach aussen erstreckenden Abschnitt bei der Fertigung des Wechselgetriebes montiert und entsprechend justiert werden, so dass sich das Kragenbauteil 4 an der Schaltwelle 3 in einer vorbestimmten Neutrallage befindet.

Die Betätigungseinheiten 16 und 17 mit ihren Betätigungsgliedern 20 und 24 werden am Hilfskraft-Betätigungsgehäuse 15 vormontiert und hier durch die entsprechend eingesetzten Justierstifte 18 und 19 in einer entsprechenden Neutrallage festgelegt.

Bei der Endmontage des Kraftfahrzeuges kann somit zunächst das Wechselgetriebe mit seinen entsprechenden Anschlüssen zu den Antriebswellen und dergleichen im Kraftfahrzeug montiert werden und in Neutrallage fixiert werden, darauffolgend kann durch einen einfachen Aufsetz-Montagevorgang die Hilfskraft-Betätigungseinheit 14 über die entsprechenden Führungsstifte 13 so zentriert und zugeordnet aufgesetzt werden, dass das eine Betätigungsglied 24 an dem einen Arm 11 des zweiarmigen Hebels 9 zur Anlage gelangt und das Betätigungsglied 20 mit dem an seiner Nabe 21 angeordneten Schaltfinger 22 in die prismatische Axialnut 12 am Kragenbauteil 4 hineingleitet. Damit ist eine lagerichtige form- bzw. kraftschlüssige Kupplung zwischen den Betätigungsgliedern und den Hebelanordnungen an der Schaltwelle hergestellt.

## Patentansprüche

1. Schaltvorrichtung mit einer Hiltskraft-Betätigungseinrichtung für ein Wechselgetriebe, mit einer an einem eine Getriebegehäuseöffnung abschliessenden Schaltvorrichtungsdeckel (1) angeordneten inneren Schaltvorrichtung (2) an deren sich nach aussen erstreckenden, radial verschwenkbaren und axial verschiebbaren Schaltwelle (3) äussere Betätigungsvorrichtungen an einem Kragenbauteil (4) angreifen, der eine Ringfläche (5) und einen radialen Hebelarm (6) aufweist, wobei
am Schaltvorrichtungsdeckel (1) an einer Konsole (7) über einen Bolzen (8) ein zweiarmiger Hebel (9) schwenkbar angeordnet ist, dessen einer Arm (10) unter die Ringfläche (5) des Kragenbauteiles (4) eingreift und dessen anderer Arm (11) ein Kupplungselement für ein Betätigungsglied (20) der Hilfskraft-Betätigungseinheit (14) bildet und der radiale Hebelarm (6) ein Kupplungselement für ein weiteres Betätigungsglied (24) der Hilfskraft-Betätigungseinheit (14) bildet,
**dadurch gekennzeichnet, dass** der radiale Hebelarm (6) in Form einer prismatischen axialen Nut (12) ausgebildet ist, und dass bei einem Aufsetz-Montagevorgang
- die äusseren Hebelanordnungen (5/9 bzw. 6/12) durch die innere Schaltvorrichtung (2) in ihrer Neutrallage gehalten sind und
- die Betätigungsglieder (24 und 20) durch im Hilfskraft-Betätigungsgehäuse (15) angeordnete Bohrungen eingesetzte Justierstifte (18 und 19) in einer entsprechenden Neutrallage gehalten sind, wobei
- der Aufsetz- und Montagevorgang der Hilfskraft-Betätigungseinheit (14) über drei Führungsbolzen (13) von erheblicher Länge geführt erfolgen kann, und wobei
- das eine Betätigungsglied (20) über einen Justierbolzen (18) aus Kunststoff in seiner Neutrallage gehalten wird, der bei einer erstmaligen Betätigung des Betätigungsgliedes abgeschert wird und
- das andere Betätigungsglied (24) über einen in eine Bohrung im Hilfskraft-Betätigungsgehäuse (15) eingesetzten Justierstift (19) in seiner Neutrallage gehalten wird, der nach erfolgter Montage von Hand aus entfernt werden muss und die dadurch freigewordene Bohrung durch Einsetzen einer herkömmlichen Entlüftungsanordnung verschlossen wird.

## Claims

1. Shift mechanism with an auxiliary force operating device for change-speed gearing with an inner shift mechanism (2) arranged on a shift mechanism cover (1) closing a gearbox opening, on whose outwardly extending, radially swivel mounted and axially displaceable selector shaft (3) external operating devices on a collar component (4) engage, wherein this collar component (4) has a ring face (5) and a radial lever arm (6), wherein on the shift mechanism cover (1) on a console (7) by means of a bolt (8) a two-armed lever (9) is arranged in a swivel mounted way, of which one arm (10) engages under the ring face (5) of the collar component (4) and its other arm (11) forms a coupling element for an operating member (20) of the auxiliary operating unit (14) and the radial lever arm (6) forms a coupling element for a further operating member (24) of the auxiliary operating unit (14)
**characterised in that** the radial lever arm (6) is formed as a prismatic axial groove (12), and during an assembly process
- the outer lever arrangements (5 / 9, 6 / 12) are held in their neutral position through the inner shift mechanism (2) and
- the operating members (24 and 20) are held in a corresponding neutral position through adjusting pins (18 and 19) inserted in bores arranged in the auxiliary force operating housing (15), wherein
- the assembly process of the auxiliary operating unit (14) can take place in a guided way by means of three guide bolts (13) of considerable length, and
- one operating member (20) is held in its neutral position by means of an adjusting bolt (18) made from synthetic material, which is sheared off the first time the operating member is activated and
- the other operating member (24) is held in its neutral position by means of an adjusting pin (19) inserted in a bore in the auxiliary force operating housing, which after complete assembly must be removed by hand and the bore which has thus become free is closed through insertion of a conventional ventilation arrangement.

## Revendications

1. Dispositif de changement de vitesse avec un organe de commande à énergie auxiliaire pour une boîte de vitesses, avec un dispositif de changement de vitesse (2) interne et disposé sur un couvercle (1) de ce dispositif fermant une ouverture de boîte de vitesses, dont l'axe de changement de vitesse (3) s'étendant vers l'extérieur, pivotant dans le sens radial et mobile dans le sens axial, reçoit des dispositifs de commande externes sur un élément de construction à collerette (4), lequel présente une surface annulaire (5) et un bras de levier (6) radial, un levier (9) à deux bras étant disposé de façon pivotante sur le couvercle (1) du dispositif de changement de vitesse sur une console (7) au moyen d'un boulon (8), levier dont un bras (10) s'engage au-dessous de la surface annulaire (5) de l'élément de construction à collerette (4) et dont l'autre bras (11) forme un élément de couplage pour un organe de commande (20) de l'unité de commande à énergie auxiliaire (14) et le bras de levier (6) radial forme un élément de couplage pour un autre organe de commande (24) de l'unité de commande à énergie auxiliaire (14),
**caractérisé en ce que** le bras de levier (6) radial est conçu sous la forme d'une rainure (12) axiale et prismatique et, lors d'une opération de pose et de montage, les agencements de levier externes (5/9 et 6/12) sont maintenus dans leur position neutre par le dispositif interne de changement de vitesse (2) et les organes de commande (24 et 20) sont maintenus dans une position neutre appropriée par des goupilles d'ajustage (18 et 19) insérées par des alésages situés dans le carter de commande à énergie auxiliaire (15), l'opération de pose et de montage de l'unité de commande à énergie auxiliaire (14) pouvant s'effectuer en étant guidée au moyen de trois boulons de guidage (13) de longueur importante, et un organe de commande (20) étant maintenu dans sa position neutre au moyen d'un boulon d'ajustage (18) en plastique, qui est cisaillé lors d'une première commande de l'organe de commande et l'autre organe de commande (24) étant maintenu dans sa position neutre au moyen d'une goupille d'ajustage (19) insérée dans un alésage dans le carter de commande à énergie auxiliaire (15), laquelle goupille devant être enlevée manuellement une fois le montage effectué et l'alésage ainsi libéré étant fermé par l'insertion d'un dispositif de ventilation classique.
